# DEMANDE DE BREVET EUROPEEN

(11) **EP 0 735 293 A1**
(43) Date de publication de la demande: **02.10.1996**
(21) Numéro de dépôt: 96400675.3
(22) Date de dépôt: 28.03.1996
(51) Int. Cl.: F16D 65/12, F16B 37/12

(54) **Procédé pour le montage d'un support de disque de frein sur une roue ferroviaire, et roue ferroviaire équipée d'au moins un tel support de disque de frein**

(30) Priorité: 29.03.1995 FR 9503721
(71) Demandeur: USINES DEHOUSSE, 64000 Pau (FR)
(72) Inventeur: Graciet, Louis, 64000 Pau (FR)
(74) Mandataire: CABINET BONNET-THIRION

(57) **Abrégé**

Il s'agit d'une roue ferroviaire (10) équipée d'au moins un disque de frein (15) de type "flasqué".

Suivant l'invention, le support (15') de ce disque de frein (15) est assujetti au voile (12) de cette roue ferroviaire (10) par des moyens de fixation (18) au voisinage, au moins, desquels se trouve interposée, entre le voile (12) et lui, une barrière thermique (19) comportant, en combinaison, une pièce intermédiaire (26) entre le voile (12) et le support (15'), et, dans les moyens de fixation (18), une garniture (33) en matériau de conductibilité thermique réduite.

Application, notamment, aux roues ferroviaires motrices.

## Description

La présente invention concerne d'une manière générale les roues ferroviaires, et elle vise plus précisément celles de ces roues ferroviaires qui doivent être équipées d'au moins un disque de frein.

Cela peut être le cas par exemple de celles appartenant à un essieu moteur.

Intervenant inévitablement dans un environnement encombré, le disque de frein ne peut en pratique qu'être disposé au plus près de la roue ferroviaire à laquelle il est associé.

La présente invention vise plus particulièrement le cas où, suivant une disposition qui se trouve par exemple décrite dans le certificat d'utilité français déposé le 20 novembre 1992 sous le No 92 13960 et publié sous le No 2 698 425, ce disque de frein est "flasqué" dans une telle roue ferroviaire, en s'étendant sensiblement parallèlement au voile de celle-ci, entre son moyeu et son bandage.

L'un des problèmes à résoudre dans ce cas tient à l'assujettissement mécanique à assurer entre le disque de frein et la roue ferroviaire.

Il est tenu pour admis à ce jour que, eu égard à sa relative minceur, cet assujettissement doit se faire en dehors du voile de la roue ferroviaire, pour épargner à celui-ci d'être conjointement soumis, d'une part, aux contraintes mécaniques induites par le couple de freinage appliqué au disque de frein, et, d'autre part, aux contraintes thermiques résultant inévitablement de l'absorption de ce couple de freinage.

L'assujettissement du disque de frein à la roue ferroviaire se fait donc usuellement à ce jour au droit du moyeu ou du bandage de cette roue ferroviaire, ce moyeu et ce bandage constituant des parties de celle-ci plus massives que son voile.

Pour ce faire, le disque de frein est solidaire d'un support, en forme de couronne par exemple, par lequel il est rapporté par des moyens de fixation sur le moyeu ou le bandage de la roue ferroviaire, et c'est le cas, notamment, dans le certificat d'utilité français No 92 13960 mentionné ci-dessus.

Cette disposition a donné et peut encore donner satisfaction.

Mais elle conduit en pratique à des réalisations relativement complexes, et donc coûteuses.

La présente invention a d'une manière générale pour objet une disposition permettant au contraire un montage plus économique d'un disque de frein sur une roue ferroviaire.

De manière plus précise, elle a pour objets un procédé propre au montage d'un support de disque de frein sur une telle roue ferroviaire et la roue ferroviaire équipée d'au moins un tel support de disque de frein en application de ce procédé.

Suivant l'invention, pour le montage d'un support de disque de frein sur une roue ferroviaire, on assujettit ce support au voile de cette roue ferroviaire par des moyens de fixation, en interposant une barrière thermique entre ce voile et lui, au voisinage, au moins, de ces moyens de fixation, et en mettant en oeuvre, en combinaison, pour la constitution de cette barrière thermique, une pièce intermédiaire, entre le voile et le support, et une garniture en matériau de conductibilité thermique réduite, dans les moyens de fixation.

Grâce à une telle barrière thermique, les contraintes induites dans le voile de la roue ferroviaire par le disque de frein, et, plus directement, par le support de celui-ci, ne résultent pour l'essentiel que des seules sollicitations mécaniques dont est lui-même l'objet ce disque de frein lors d'un freinage.

En effet, cette barrière thermique retarde suffisamment la transmission de la chaleur par conduction du support au voile de la roue ferroviaire pour que les calories correspondantes puissent elles-mêmes être systématiquement évacuées vers l'extérieur par convexion.

Le voile de la roue ferroviaire étant ainsi épargné d'un échauffement sensible, il est à même, par ses seuls critères de dimensionnement, d'absorber sans risque les sollicitations mécaniques dont il est l'objet.

La disposition suivant l'invention conduit ainsi avantageusement à des réalisations relativement simples et économiques, tout en étant particulièrement efficaces et sûres.

Certes, dans le certificat d'utilité français No 2 698 425 mentionné ci-dessus, il est déjà prévu d'interposer axialement un organe entre un support de disque de frein et le voile de la roue ferroviaire à laquelle il est associé.

Mais il s'agit, en l'espèce, d'un organe atténuateur, qui intervient largement à distance des moyens de fixation correspondants, et qui a pour simple but, et pour simple effet, de constituer un organe amortisseur propre à casser les éventuelles vibrations internes de l'un ou l'autre des éléments au contact desquels il se trouve.

Il ne s'agit donc pas d'une barrière thermique comparable à celle prévue suivant l'invention.

Dans la demande de brevet européen No 0 548 700, il y a aussi des douilles qui sont interposées axialement entre le disque de frein et le voile de la roue ferroviaire concernée, ces douilles entourant chacune respectivement le fût des vis assurant la fixation du disque de frein à ce voile.

Mais si, par ailleurs, le voile est isolé du bandage par des patins en caoutchouc, il n'est prévu aucune isolation thermique entre le filetage des vis et lui.

Dans la demande de brevet allemand No 1 044 857 se trouvent corollairement décrits et représentés plusieurs montages, dont aucun ne relève d'une structure similaire à celle du montage mis en oeuvre dans la roue ferroviaire objet de la présente demande de brevet, et dans aucun desquels ne se trouve proposée la mise en oeuvre d'une quelconque isolation thermique autour du filetage des vis mises en oeuvre.

Il en est de même dans le brevet britannique No 1 105 370.

Il n'en est par contre pas de même suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue partielle en coupe axiale d'une roue ferroviaire suivant l'invention ;
la figure 2 reprend, à échelle supérieure, le détail de la figure 1 repéré par un encart II sur cette figure 1 ;
la figure 3 reprend, à échelle encore supérieure, le détail de la figure 2 repéré par un encart III sur cette figure 2 ;
les figures 4, 5 et 6 sont, à des échelles différentes, des vues partielles en coupe axiale qui, analogues à celle de la figure 2, se rapportent chacune respectivement à diverses variantes de réalisation.

Tel qu'illustré sur ces figures, et de manière connue en soi, la roue ferroviaire 10 suivant l'invention comporte, globalement, un moyeu 11, un voile 12, et un bandage 13 à boudin 14.

De manière également connue en soi, elle est équipée d'au moins un disque de frein 15, qui est calé en rotation sur elle, et qui, en pratique, est de type "flasqué", ce disque de frein 15 s'étendant sensiblement parallèlement à son voile 12, entre son moyeu 11 et son bandage 13, dans le volume creux 16 laissé annulairement libre par le voile 12 entre ce moyeu 11 et ce bandage 13.

En pratique, la roue ferroviaire 10 comporte deux disques de frein 15, qui, disposés globalement dos à dos, s'étendent chacun respectivement de part et d'autre de son voile 12.

Les faces 17 opposées de ces disques de frein 15 sont planes, sensiblement perpendiculairement à l'axe de l'ensemble, pour l'action de patins de freinage non représentés.

De manière connue en soi, chacun des disques de frein 15 est solidaire d'un support 15', par lequel il est rapporté sur la roue ferroviaire 10.

Dans les formes de réalisation représentées, les disques de frein 15 sont chacun solidaires de leur support 15' en formant d'un seul tenant une seule et même pièce avec celui-ci.

Mais il n'en est pas nécessairement ainsi.

Au contraire, ils peuvent chacun former une pièce qui, initialement distincte de ce support 15', est dûment rapportée sur celui-ci.

Suivant l'invention, le support 15' de chacun des disques de frein 15 est assujetti au voile 12 par des moyens de fixation 18 au voisinage, au moins, desquels se trouve interposée, entre le voile 12 et lui, suivant des modalités décrites plus en détail ultérieurement, une barrière thermique 19.

Corollairement, le support 15' de chacun de ces disques de frein 15 est exempt de tout contact, direct ou indirect, avec le moyeu 11 et le bandage 13.

En pratique, les moyens de fixation 18 sont communs à l'un et l'autre des deux supports 15' des disques de frein 15.

Dans les formes de réalisation représentées, ils mettent en oeuvre au moins un tirant 20, qui, s'étendant sensiblement parallèlement à l'axe de l'ensemble, traverse de part en part chacun des supports 15' et le voile 12, à la faveur de perçages de ceux-ci, 21 pour les supports 15' et 22 pour le voile 12, et qui, au-delà de ces perçages 21, 22, prend directement ou indirectement appui sur eux, c'est-à-dire, en l'espèce, sur les supports 15'.

Bien entendu, plusieurs tirants 20 sont prévus, circulairement, de place en place, en étant convenablement répartis autour de l'axe de l'ensemble.

Chacun d'eux comporte, à l'une au moins de ses extrémités, un tronçon fileté 23 par lequel il est en prise avec un écrou 24 pour appui sur un support 15' à la faveur d'un lamage 25 de celui-ci.

Dans les formes de réalisation représentées, chacun des tirants 20 est formé d'une tige filetée comportant un tronçon fileté 23 à chacune de ses extrémités, pour coopération avec un écrou 24 à chacune de celles-ci.

Mais, en variante, il peut s'agir aussi bien d'un boulon, c'est-à-dire d'un ensemble vis-écrou.

La tête de la vis intervient alors du côté d'un des supports 15', et l'écrou du côté de l'autre de ceux-ci.

Quoi qu'il en soit, dans la forme de réalisation représentée, chacun des tirants 20 prend directement appui sur les supports 15' des disques de frein 15, par un écrou ou une tête de vis.

Quoi qu'il en soit, également, la barrière thermique 19 prévue suivant l'invention comporte, en combinaison, pour chacun des supports 15' des disques de frein 15, et pour chacun des tirants 20, dans les formes de réalisation représentées, d'une part, entre le voile 12 et un tel support 15', une pièce intermédiaire 26, qui, disposée annulairement autour d'un tel tirant 20, est interposée axialement entre le voile 12 et ce support 15', et, d'autre part, dans les moyens de fixation 18 formés par un tel tirant 20 et l'écrou 24 avec lequel il est en prise, et suivant des modalités décrites plus en détail ultérieurement, une garniture 33 en matériau de conductibilité thermique réduite.

Préférentiellement, et tel que représenté, la pièce intermédiaire 26 est au moins pour partie encastrée dans un lamage 27 du support 15', sur la face 28 de celui-ci tournée vers le voile 12.

Dans les formes de réalisation représentées, il est prévu, pour chacun des tirants 20, deux pièces intermédiaires 26 distinctes, à raison d'une pour chacun des supports 15'.

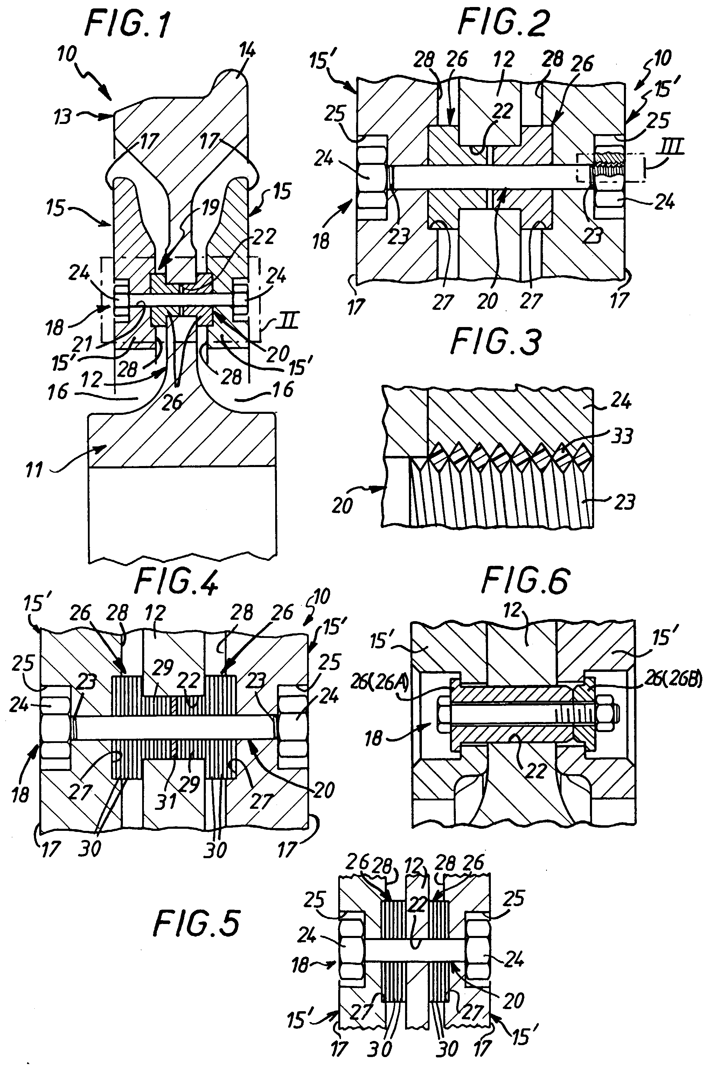

Sur les figures 1 à 4, ces pièces intermédiaires 26 comportent un tronçon de diamètre réduit 29 par lequel elles sont au moins pour partie engagées dans le perçage 22 du voile 12.

Par exemple, figures 1 à 3, il s'agit de pièces intermédiaires 26 massives.

En variante, figure 4, les pièces intermédiaires 26 comportent, au moins localement, un empilement de pièces élémentaires 30 minces.

En pratique, dans la forme de réalisation représentée, il en est ainsi pour l'ensemble des pièces intermédiaires 26, tronçon de diamètre réduit 29 compris.

En pratique, également, les pièces élémentaires 30 sont de simples rondelles.

Lorsque, comme représenté à la figure 4, les pièces intermédiaires 26 sont ainsi formées d'un empilement de pièces élémentaires 30 et comportent un tronçon de diamètre réduit 29, il est prévu entre elles une rondelle 31 supplémentaire, pour le maintien de l'ensemble.

Dans la forme de réalisation représentée sur la figure 5, les pièces intermédiaires 26 n'ont pas de tronçon de diamètre réduit 29 engagé dans le perçage 22 du voile 12, mais, comme précédemment, elles sont formées d'un empilement de pièces élémentaires 30 minces.

Dans la forme de réalisation représentée sur la figure 6, les pièces intermédiaires 26 sont massives comme dans la forme de réalisation représentée sur les figures 1, 2, mais elles sont différentes l'une de l'autre, l'une formant un centreur 26A qui traverse de part en part le voile 12 à la faveur du perçage 22 de celui-ci, tandis que l'autre forme une simple bague 26B.

Dans tous les cas, les pièces intermédiaires 26 suivant l'invention sont préférentiellement réalisées en un matériau de conductibilité thermique réduite.

Par exemple, lorsque ces pièces intermédiaires 26 comportent un empilement de pièces élémentaires 30, ou sont intégralement constituées d'un tel empilement, les rondelles constituant ces pièces élémentaires 30 peuvent très simplement être en acier inoxydable.

En pratique, la conductibilité thermique d'un tel acier inoxydable est comprise entre 10 et 20 W/m°C.

En variante, il est possible également de mettre en oeuvre des céramiques, de conductibilité thermique comprise entre 1 et 30 W/m°C.

Corollairement, la garniture 33, en matériau de conductibilité thermique, que comporte, conjointement, dans les moyens de fixation 18, la barrière thermique 19 suivant l'invention, fait préférentiellement partie intégrante de ces moyens de fixation 18.

En pratique, dans les formes de réalisation représentées, cette garniture 33 est interposée entre chacun des tronçons filetés 23 des tirants 20 et l'écrou 24 correspondant.

Par exemple, cette garniture 33 est formée par un cordon hélicoïdal inséré en fond de gorge dans l'écrou 24.

Le matériau de conductibilité thermique réduite constitutif de ce cordon peut, comme précédemment, être de l'acier inoxydable.

Mais il peut aussi s'agir d'un matériau du type de celui vendu sous la désignation commerciale "INCONEL", ou de tout autre matériau à propriété isolante.

Eu égard, par exemple, à l'écrasement, au vissage, du cordon hélicoïdal initial, la garniture 33 suivant l'invention vient occuper, en totalité, comme représenté, le fond de gorge de l'écrou 24, tout en reformant une gorge décalée d'un demi-pas par rapport à celle de celui-ci.

Tout pontage thermique direct entre le tirant 20 et l'écrou 24 est ainsi évité, ce qui assure la barrière thermique 19 recherchée.

Comme les pièces intermédiaires 26, la garniture 33 joue donc elle aussi le rôle de retardateur dans la transmission de la chaleur.

Elle joue également avantageusement le rôle de frein d'écrou.

La déformation dont est l'objet au vissage le cordon hélicoïdal initial peut, comme indiqué, résulter d'un simple écrasement de celui-ci, et, donc, résulter des propriétés intrinsèques de son matériau constitutif.

Mais, elle peut en variante résulter au moins pour partie de dispositions structurelles prévues à cet effet, et, par exemple, de fentes.

La présente invention ne se limite d'ailleurs pas aux formes de réalisation décrites et représentées, mais englobe toute variante d'exécution et/ou de combinaison de leurs divers éléments.

En particulier si, dans ce qui précède, il a été supposé que les supports des disques de frein étaient massifs et monobloc, il peut tout aussi bien s'agir de supports à rayons et/ou de supports fragmentés en segments.

En outre, lorsque les pièces intermédiaires prévues suivant l'invention comportent un empilement de pièces élémentaires en forme de rondelles, il peut être prévu des entretoises entre celles-ci pour les séparer par des lames d'air et ainsi minimiser une transmission de la chaleur par convexion, ces entretoises pouvant par exemple être réalisées en matériau de conductibilité thermique réduite, comme les rondelles elles-mêmes.

Le matériau constitutif de ces rondelles n'est par ailleurs pas nécessairement le même pour toutes.

Au contraire, ces rondelles peuvent être réalisées dans des matériaux différents, afin d'en optimiser globalement les propriétés isolantes.

## Revendications

1. Procédé pour le montage d'un support de disque de frein sur une roue ferroviaire, du genre selon lequel on assujettit le support (15') au voile (12) de la roue ferroviaire (10) par des moyens de fixation (18), en interposant une barrière thermique (19) entre ce voile (12) et lui au voisinage, au moins, de ces moyens de fixation (18), caractérisé en ce que, pour la constitution de la barrière thermique (19), on met en oeuvre, en combinaison, entre le voile (12) et le support (15'), une pièce intermédiaire (26), et, dans les moyens de fixation (18), une garniture (33) en matériau de conductibilité thermique réduite.

2. Procédé suivant la revendication 1, caractérisé en qu'on forme la pièce intermédiaire (26) par un empilement de pièces élémentaires (30) minces.

3. Roue ferroviaire du genre comportant un moyeu (11), un voile (12) et un bandage (13), avec, calé en rotation sur elle, sensiblement parallèlement au voile (12), au moins un support (15') de disque de frein (15), le support (15') étant assujetti au voile (12) par des moyens de fixation (18) au voisinage, au moins, desquels se trouve interposée, entre le voile (12) et lui, une barrière thermique (19), caractérisée en ce que la barrière thermique (19) comporte une pièce intermédiaire (26), qui est interposée axialement entre le voile (12) et le support (15'), et une garniture (33), en matériau de conductibilité thermique réduite, qui appartient aux moyens de fixation (18).

4. Roue ferroviaire suivant la revendication 3, caractérisée en ce que, les moyens de fixation (18) mettant en oeuvre au moins un tirant (20), qui traverse de part en part le support (15') et le voile (12), à la faveur de perçages (21, 22) de ceux-ci, et qui, au-delà de ces perçages (21, 22), prend directement ou indirectement appui sur eux, la pièce intermédiaire (26) que comporte la barrière thermique (19) est disposée annulairement autour dudit tirant (20).

5. Roue ferroviaire suivant la revendication 4, caractérisée en ce que la pièce intermédiaire (26) est au moins pour partie encastrée dans un lamage (27) du support (15').

6. Roue ferroviaire suivant l'une quelconque des revendications 4, 5, caractérisée en ce que, par un tronçon de diamètre réduit (29), la pièce intermédiaire (26) est au moins pour partie engagée dans le perçage (22) du voile (12).

7. Roue ferroviaire suivant l'une quelconque des revendications 4 à 6, caractérisée en ce que la pièce intermédiaire (26) comporte un empilement de pièces élémentaires (30) minces.

8. Roue ferroviaire suivant la revendication 7, caractérisée en ce que les pièces élémentaires (30) minces sont des rondelles en acier inoxydable.

9. Roue ferroviaire suivant la revendication 3, caractérisée en ce que la garniture (33) en matériau de conductibilité thermique réduite que comporte la barrière thermique (19) fait partie intégrante des moyens de fixation (18).

10. Roue ferroviaire suivant la revendication 9, caractérisée en ce que, les moyens de fixation (18) mettant en oeuvre au moins un tirant (20), qui traverse de part en part le support (15') et le voile (12) à la faveur de perçages (21, 22) de ceux-ci, et qui, au-delà de ces perçages (21, 22), prend directement ou indirectement appui sur eux, et ledit tirant (20) comportant, à l'une au moins de ses extrémités, un tronçon fileté (23) par lequel il est en prise avec un écrou (24) pour un tel appui, la garniture (33) en matériau de conductibilité thermique réduite que comporte la barrière thermique (19) est interposée entre ledit tronçon fileté (23) et ledit écrou (24).

11. Roue ferroviaire suivant la revendication 10, caractérisée en ce que la garniture (33) est formée par un cordon hélicoïdal inséré en fond de gorge dans l'écrou (24).

12. Roue ferroviaire suivant l'une quelconque des revendications 3 à 11, caractérisée en ce que le support (15') est exempt de tout contact, direct ou indirect, avec le moyeu (11) et le bandage (13).

13. Roue ferroviaire suivant l'une quelconque des revendications 3 à 12, caractérisée en ce qu'elle comporte deux supports (15') de disque de frein (15) disposés dos à dos de part et d'autre du voile (12).
